# EUROPEAN PATENT APPLICATION

(11) **EP 4 843 950 A1**
(43) Date of publication of application: **25.11.2026**
(21) Application number: 26171559.3
(22) Date of filing: 09.04.2026
(51) Int. Cl.: C01B 33/149, C01B 32/05, C01B 33/18, C09C 1/44, H01M 4/38, H01M 4/134

(54) **COMPOSITE POROUS SI PARTICLE, ANODE LAYER, AND BATTERY**

(30) Priority: 22.05.2025 JP 2025085303
(71) Applicant: Toyota Jidosha Kabushiki Kaisha, Toyota-shi, Aichi-ken 471-8571 (JP)
(72) Inventor: OHTA, Ryoshi, TOYOTA-SHI, AICHI-KEN, 471-8571 (JP)
(74) Representative: Cabinet Beau de Loménie

(57) **Abstract**

The present disclosure relates to a composite porous Si particle. The composite porous Si particle of the present disclosure contains carbon on at least part of a surface of a porous Si particle. A pore volume of the composite porous Si particle is 0.24 cm³/g or more and 0.61 cm³/g or less.

## Description

### BACKGROUND OF THE INVENTION

### 1. Field of the Invention

The present disclosure relates to a composite porous Si particle, an anode layer, and a battery.

### 2. Description of Related Art

Various technologies have been proposed for composite porous Si particles as disclosed in Japanese Unexamined Patent Application Publication No. 2024-179306 (JP 2024-179306 A).

### SUMMARY OF THE INVENTION

Hitherto, various anode active materials have been proposed in order to obtain anodes having excellent battery characteristics such as high cycle characteristics and high output characteristics. An anode has a structure in which an anode layer containing an anode active material and, if necessary, an anode current collector are laminated. To increase the capacity of a battery, research has been conducted into a silicon (Si)-based anode active material having a theoretical capacity that is 10 times or more as large as that of graphite.

Since Si undergoes a large volume change during charging and discharging, it is difficult to maintain the structure of the anode active material and furthermore the anode layer. Therefore, there is a demand for improvement in cycle characteristics. To suppress the volume change of Si, technologies for obtaining porous or composite Si have been proposed. For example, JP 2024-179306 A discloses a composite porous Si particle in which a Si particle having a porous structure is combined with an ion conductor having a Young's modulus and an ionic conductivity within specific ranges.

The anode layer containing the anode active material may be subjected to pressing in a battery manufacturing process. The pressing is intended to increase the density of the anode layer and improve the electrode performance and durability. In the related-art composite porous Si particle, however, the pores may be collapsed by the pressing. This is because the mechanical strength of the particle decreases due to the porous structure. When the pores in the composite porous Si particle are collapsed, the effect of the porous structure of the Si particle will not be fully exhibited.

The present disclosure has been made in view of the above circumstances, and has a main object to provide a composite porous Si particle that can maintain pores even after pressing.

That is, the present disclosure includes the following aspects.
<1> A composite porous Si particle containing carbon on at least part of a surface of a porous Si particle, in which
   a pore volume of the composite porous Si particle is 0.24 cm³/g or more and 0.61 cm³/g or less.
<2> The composite porous Si particle according to <1>, in which a specific surface area of the composite porous Si particle is 135 m²/g or more and 164 m²/g or less.
<3> The composite porous Si particle according to <1> or <2>, in which a content of the carbon in the composite porous Si particle is 9 mass% or more and 37 mass% or less.
<4> An anode layer containing the composite porous Si particle according to any one of <1> to <3>.
<5> A battery including the anode layer according to <4>.

According to the present disclosure, it is possible to provide the composite porous Si particle that can maintain the pores even after the pressing.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a tubular furnace used in production of composite porous Si particles in examples;
FIG. 2 is a table showing data on the examples and comparative examples; and
FIG. 3 is a graph showing post-press porosities of the examples and the comparative examples.

### DETAILED DESCRIPTION OF EMBODIMENTS

An embodiment of the present disclosure will be described below. The dimensional relationships (such as length, width, and thickness) shown in the drawings do not reflect the actual dimensional relationships.

In the present disclosure, unless otherwise specified, the average particle size of particles is the median diameter (D50) value, which is a particle size at an integrated value of 50% in volume-based particle size distribution measured by laser diffraction/scattering particle size distribution measurement.

### 1. Composite Porous Si Particle

The present disclosure provides a composite porous Si particle containing carbon on at least part of a surface of a porous Si particle. A pore volume of the composite porous Si particle is 0.24 cm³/g or more and 0.61 cm³/g or less.

The composite porous Si particle of the present disclosure has excellent mechanical strength. Therefore, collapse of the pores is suppressed even when the composite porous Si particle is subjected to pressing. This means that the composite porous Si particle of the present disclosure has succeeded in improving the strength of the porous Si particle while maintaining the porous structure by coating at least part of the surface of the porous Si particle with a carbon material and setting the pore volume within the above specific range. The composite porous Si particle of the present disclosure maintains the pores even after the pressing, and therefore can suppress volume changes along with charging and discharging, and can be expected to exhibit excellent cycle characteristics. With the composite porous Si particle of the present disclosure, it is possible to obtain sufficient effects such as improvement in electronic conductivity and durability of the electrode by the pressing. Therefore, it is possible to improve battery characteristics by using the composite porous Si particle of the present disclosure as an active material.

The composite porous Si particle of the present disclosure has the pore volume in the range of 0.24 cm³/g or more and 0.61 cm³/g or less. There is a possibility that porous Si particles having a pore volume exceeding 0.61 cm³/g cannot have sufficient strength even when their surfaces are coated with carbon, and the porous structure cannot be maintained due to pressing, resulting in a decrease in porosity. There is a possibility that composite porous Si particles having a pore volume of less than 0.24 cm³/g cannot fully exhibit the benefits of their porous structures due to the small number of pores.

The pore volume of the composite porous Si particle is not particularly limited as long as it is within the above range, but may be 0.30 cm³/g or more, 0.40 cm³/g or more, or 0.50 cm³/g or more. The pore volume of the composite porous Si particle can be calculated, for example, by the BJH method using a gas adsorption apparatus.

The composite porous Si particle of the present disclosure includes a porous Si particle having a porous structure as an active material. Having a porous structure means that the particle has a structure in which at least the surface thereof has a large number of fine holes (pores). Porous Si particles generally have a large number of pores on the surface and inside. The porosity of the porous Si particle constituting the composite porous Si particle of the present disclosure may be, for example, 8% or more, 10% or more, or 20% or more, and 60% or less, 50% or less, or 40% or less. The method for calculating the porosity is not particularly limited. For example, the porosity can be calculated through observation of a scanning electron microscope (SEM) image of the cross section of the porous Si particle by the following expression:$Porosity \left(%\right) = \left(pore area\right) / \left(particle area\right) \times 100$

The porous Si particle may be crystalline or amorphous. In the case of a crystalline particle, the crystallite size is small and the structure is dense. Therefore, the mechanical strength is excellent. In the case of an amorphous particle, the expansion and contraction along with charging and discharging are small. Therefore, stable cycle characteristics can be obtained.

The pore volume of the porous Si particle may be any value as long as the pore volume of the composite porous Si particle having at least part of the surface coated with carbon is within the above range, but may be, for example, 0.20 cm³/g or more, 0.60 cm³/g or more, 0.88 cm³/g or more, or 1.20 cm³/g or less. The pore volume of the porous Si particle can be calculated, for example, by the BJH method using a gas adsorption apparatus.

The specific surface area of the porous Si particle serving as a raw material for the composite porous Si particle is not particularly limited, but may be, for example, in a range of 20 m²/g or more and 160 m²/g or less. The specific surface area of the porous Si particle can be calculated, for example, by the BET method using a gas adsorption apparatus.

The average primary particle size of the porous Si particle is, for example, 50 nm or more, but may be 100 nm or more, or 150 nm or more, and is, for example, 3000 nm or less, but may be 1500 nm or less, or 1000 nm or less. The average primary particle size can be calculated, for example, by SEM observation.

It is sufficient that the composite porous Si particle of the present disclosure has carbon on at least part of the surface of the porous Si particle, but carbon need not be present on the entire surface of the porous Si particle. For example, carbon may be present in 30% or more of the surface area of the porous Si particle. Having carbon on at least part of the surface means that a carbon material is present on at least part of the surface, and includes a state in which part or all of the surface of the porous Si particle is coated with a film of the carbon material. The carbon material may be amorphous or crystalline.

The method for introducing carbon into the surface of the porous Si particle is not particularly limited, but any known method can be used. For example, porous Si particles are placed in a chemical vapor deposition apparatus in which a pyrolytic carbon source gas and a carrier inert gas flow, and the apparatus is heated to 700°C to 1000°C. Examples of the pyrolytic carbon source gas include propane, acetylene, ethylene, and acetone. Examples of the inert gas include nitrogen, helium, and argon. The amount of carbon present on the surface of the porous Si particle can be controlled by the flow time (reaction time) of the pyrolytic carbon source gas. The reaction time of the pyrolytic carbon source gas varies depending on other conditions. For example, when ethylene is used as the pyrolytic carbon source gas and the reaction temperature is 700°C to 1000°C, the reaction time may be about 0.3 hours to about 2.5 hours, or may be 0.5 hours to 2.0 hours.

The composite porous Si particle of the present disclosure may have a specific surface area in a range of 135 m²/g or more and 164 m²/g or less. The specific surface area of the composite porous Si particle may be 140 m²/g or more, or 150 m²/g or more. The specific surface area of the composite porous Si particle can be calculated, for example, by the BET method using a gas adsorption apparatus.

The composite porous Si particle of the present disclosure may have a carbon content of 9 mass% or more and 37 mass% or less. The carbon content of the composite porous Si particle may be 32 mass% or less, or 27 mass% or less. The carbon content of the composite porous Si particle is the proportion of carbon when the mass of the composite porous Si particle is 100%, and can be determined, for example, using a CS meter.

The composite porous Si particle may be a primary particle or a secondary particle formed by aggregation of primary particles.

### 2. Anode Layer

The composite porous Si particle provided by the present disclosure can be used, for example, as an anode active material constituting an anode of a battery (such as a lithium-ion battery). That is, the present disclosure can provide an anode layer containing the composite porous Si particle of the present disclosure. By using the composite porous Si particle of the present disclosure as the anode active material, improvement in battery characteristics such as cycle characteristics can be expected.

The anode layer is a layer containing at least the composite porous Si particle of the present disclosure as the anode active material.
The anode active material contained in the anode layer may consist solely of the composite porous Si particle of the present disclosure, or may further contain other anode active materials.
Examples of other anode active materials include at least one selected from the group consisting of carbon-based active materials, Li-based active materials, and lithium titanate. Examples of the carbon-based active materials include at least one selected from the group consisting of graphite, soft carbon, and hard carbon. "Graphite" is a general term for natural graphite and artificial graphite. Examples of the Li-based active materials include Li, Li silicate, and Li alloys.
Other anode active materials may include Si-based active materials other than the composite porous Si particle of the present disclosure, Si-C composite materials, etc. Examples of the Si-based active materials include Si, SiO, and Si alloys.
Other anode active materials may be, for example, in the form of particles or sheets. The average particle size of the particles of the anode active material may be, for example, 50 nm or more and 30 µm or less.
When the composite porous Si particle of the present disclosure is used as the anode active material in combination with other anode active materials, the proportion of the composite porous Si particle of the present disclosure in the total amount of the anode active materials is not particularly limited, but may be, for example, 60 mass% or more, or 90 mass% or more when the total amount of the anode active materials is 100 mass%.

The anode layer may contain at least one of an electrolyte, a conductive material, and a binder if necessary.
Examples of the electrolyte include solid electrolytes. The solid electrolyte may be an inorganic solid electrolyte such as a sulfide solid electrolyte, a halide solid electrolyte, an oxide solid electrolyte, or a complex hydride solid electrolyte, or may be an organic solid electrolyte such as a gel electrolyte.

The sulfide solid electrolyte is an electrolyte containing a S element. The sulfide solid electrolyte typically contains at least a Li element and a S element. The sulfide solid electrolyte may further contain an Me element (Me is at least one of P, As, Sb, Si, Ge, Sn, B, Al, Ga, and In). The sulfide solid electrolyte may also contain a halogen element such as F, Cl, Br, or I.

The sulfide solid electrolyte may be a sulfide glass (amorphous) solid electrolyte, a sulfide glass ceramic solid electrolyte, or a crystalline sulfide solid electrolyte. The sulfide solid electrolyte may have a crystalline phase. Examples of the crystalline phase include a thio-LISICON crystalline phase, an argyrodite crystalline phase, and an LGPS crystalline phase.

The composition of the sulfide solid electrolyte is not particularly limited, but examples thereof include xLi₂S·(1 - x)P₂S₅ (0.5 ≤ x < 1) and yLiI·zLiBr·(100 - y - z)(xLi₂S·(1 - x)P₂S₅) (0.5 ≤ x < 1, 0 ≤ y ≤ 30, 0 ≤ z ≤ 30). In these compositions, x may satisfy 0.7 ≤ x ≤ 0.8. Another example of the composition of the sulfide solid electrolyte is Li₇₋ₓPS₆₋ₓXₓ. X is at least one of F, Cl, Br, and I, and x satisfies 0 ≤ x < 2. Another example of the composition of the sulfide solid electrolyte is Li₄₋ₓM₁₋ₓPₓS₄ (0 < x < 1). M is at least one of Al, Zn, In, Ge, Si, Sn, Sb, Ga, and Bi. Examples of the sulfide solid electrolyte include LiI-LiBr-Li₂S-P₂S₅, LiI-Li₂S-P₂S₅, LiI-Li₂S-P₂O₅, and LiI-Li₃PO₄-P₂S₅.

Examples of the oxide solid electrolyte include materials having a garnet crystal structure and containing a Li element, a La element, an A element (A is at least one of Zr, Nb, Ta, and Al), and an O element. Examples of the oxide solid electrolyte include Li₂O-B₂O₃-P₂O₅, Li₂O-SiO₂, Li₂O-B₂O₃, Li_{1.3}Al_{0.3}Ti_{0.7}(PO₄)₃, Li₅La₃Ta₂O₁₂, Li₇La₃Zr₂O₁₂, Li₆BaLa₂Ta₂O₁₂, Li_{3.6}Si_{0.6}P_{0.4}O₄, Li₄SiO₄, Li₃PO₄, and Li₃₊ₓPO₄₋ₓNₓ (1 ≤ x ≤ 3).

Examples of the halide solid electrolyte include a solid electrolyte containing Li, D, and X (D represents at least one of Ti, Al, and Y, and X represents F, Cl, or Br).

The gel electrolyte may contain an electrolyte solution and a polymer material. The polymer material may form a polymer matrix. The polymer material may include, for example, at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG), and derivatives thereof.

The solid electrolyte may be in the form of particles from the standpoint of ease of handling. The average particle size of the particles of the solid electrolyte is not particularly limited, but may be 1 nm to 100 µm.
The proportion of the solid electrolyte in the anode layer is not particularly limited, but may be, for example, 1 mass% or more, and 60 mass% or less.

Examples of the conductive material include carbon-based conductive materials, metal particles, and conductive polymers. Examples of the carbon-based conductive materials include particulate materials such as acetylene black (AB) and Ketjenblack (KB), and fibrous materials such as vapor-grown carbon fibers (VGCFs), carbon nanotubes (CNTs), and carbon nanofibers (CNFs).
The proportion of the conductive material in the anode layer is not particularly limited, but may be, for example, 0.1 mass% or more, and 5 mass% or less.

Examples of the binder include styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), styrene-isoprene-styrene block copolymers (SISs), and ethylene-propylene-diene copolymers (EPDMs).
The proportion of the binder in the anode layer is not particularly limited, but may be, for example, 0.5 mass% or more, and 15 mass% or less.

The thickness of the anode layer is, for example, 0.1 µm or more and 1000 µm or less, and may be 1 µm or more and 500 µm or less, or 30 µm or more and 100 µm or less.

The method for producing the anode layer is not particularly limited. For example, the composite porous Si particles (anode active material) are mixed with the conductive material, the binder, the electrolyte, and a solvent to prepare an anode slurry, and the anode slurry is applied to an anode current collector and dried, thereby forming the anode layer on the anode current collector. When forming the anode layer, pressing may be performed to press the anode layer in the thickness direction. Examples of the pressing include roller pressing and flat plate pressing.
Examples of the solvent include N-methylpyrrolidone (NMP), tetralin, diisobutyl ketone, butyl butyrate, mesitylene, heptane, dibutyl ether, decane, dodecane, isodecane, and toluene, and the solvent may contain two or more of these components.

Examples of materials for the anode current collector include SUS, aluminum, copper, nickel, iron, titanium, and carbon. The thickness of the anode current collector may be, for example, in a range of 1 µm to 50 µm. The anode current collector may be in the form of a foil, a plate, etc. The shape of the anode current collector as viewed in plan is not particularly limited, but examples include circular, elliptical, rectangular, and any polygonal shapes. The anode current collector may have a configuration in which a buffer layer, an elastic layer, or a positive temperature coefficient (PTC) thermistor layer is disposed on the surface thereof.
The anode layer may be disposed on one surface of the anode current collector, or may be disposed on both surfaces of the anode current collector. The anode layer may have a multilayer structure in which two or more layers are laminated.

### 3. Battery

The anode layer provided by the present disclosure can be used as a layer constituting an anode as described above. That is, the present disclosure can provide a battery including the anode layer of the present disclosure. A specific battery configuration is a battery in which a cathode, an electrolyte layer, and an anode are laminated in this order, and the anode includes the anode layer. Since the battery provided by the present disclosure includes the above anode layer of the present disclosure, the battery is presumed to have excellent battery characteristics such as cycle characteristics.
The battery will now be described.

### Anode

The anode includes the anode layer of the present disclosure, and further includes an anode current collector if necessary. The anode layer and the anode current collector have already been described, and therefore descriptions thereof will be omitted.

### Cathode

The cathode includes a cathode layer, and further includes a cathode current collector if necessary.
The cathode layer is a layer containing at least a cathode active material. Examples of the cathode active material include lithium iron phosphate (olivine structure), lithium manganese phosphate (olivine structure), lithium manganese iron phosphate (olivine structure), LiMnO₂ (rock salt structure), Li(NiMn)₂O₄ (spinel structure), and LiCoO₂ (layered structure).
The proportion of the cathode active material in the cathode layer is, for example, 20 mass% or more, but may be 30 mass% or more, or 40 mass% or more, and is, for example, 95 mass% or less, but may be 70 mass% or less, or 60 mass% or less.

The cathode layer may contain at least one of an electrolyte, a conductive material, and a binder if necessary. The electrolyte, the conductive material, and the binder used in the cathode layer may be the same as those described above in "2. Anode Layer."

Examples of materials for the cathode current collector include SUS, Cr, Au, Pt, Zn, aluminum, copper, nickel, iron, titanium, and carbon. The thickness of the cathode current collector is, for example, 0.1 µm or more and 100 µm or less. The cathode current collector may be in the form of a foil, a plate, etc. The shape of the cathode current collector as viewed in plan is not particularly limited, but examples include circular, elliptical, rectangular, and any polygonal shapes. The cathode current collector may have a configuration in which a buffer layer, an elastic layer, or a PTC thermistor layer is disposed on the surface thereof.
The cathode layer may be disposed on one surface of the cathode current collector, or may be disposed on both surfaces of the cathode current collector.

### Electrolyte Layer

The electrolyte layer is formed between the cathode layer and the anode layer, and contains at least an electrolyte. The electrolyte may be a solid electrolyte or a liquid electrolyte (electrolyte solution). The solid electrolyte may be the same as that described above in "2. Anode Layer." The electrolyte solution may be an aqueous electrolyte solution or a non-aqueous electrolyte solution. One of these electrolyte solutions may be used alone, or two or more of these electrolyte solutions may be used in combination.

The solvent of the aqueous electrolyte solution contains water as a main component. That is, based on the total amount (100 mol%) of the solvent (liquid component) constituting the electrolyte solution, the proportion of water may be 50 mol% or more, particularly 70 mol% or more, and more particularly 90 mol% or more. The upper limit of the proportion of water in the solvent is not particularly limited.

Although the solvent contains water as a main component, it may also contain a solvent other than water. The solvent other than water is, for example, one or more selected from ethers, carbonates, nitriles, alcohols, ketones, amines, amides, sulfur compounds, and hydrocarbons. Based on the total amount (100 mol%) of the solvent (liquid component) constituting the electrolyte solution, the proportion of solvents other than water may be 50 mol% or less, particularly 30 mol% or less, and more particularly 10 mol% or less.

The aqueous electrolyte solution used in the present disclosure contains an electrolyte. A conventionally known electrolyte may be used as the electrolyte for the aqueous electrolyte solution. Examples of electrolytes include lithium salts of imide compounds, lithium nitrates, lithium acetates, and lithium sulfates. Specific examples of electrolytes include lithium bis(fluorosulfonyl)imide (LiFSI), lithium bis(trifluoromethanesulfonyl)imide (LiTFSI), lithium bis(pentafluoroethanesulfonyl)imide (LiBETI), lithium bis(nonafluorobutanesulfonyl)imide, lithium nonafluoro-N-[(trifluoromethane)sulfonyl]butanesulfonylamide, lithium N,N-hexafluoro-1,3-disulfonylimide, CH₃COOLi, LiPF₆, LiBF₄, Li₂SO₄, and LiNO₃.

The concentration of the electrolyte in the aqueous electrolyte solution can be set as appropriate within a range that does not exceed the saturation concentration of the electrolyte in the solvent, according to the desired battery characteristics. This is because, if a solid electrolyte remains in an aqueous electrolyte solution, the solid may inhibit the battery reaction.
For example, when LiTFSI is used as the electrolyte, the aqueous electrolyte solution may contain 1 mol or more, particularly 5 mol or more, and more particularly 7.5 mol or more, of LiTFSI per 1 kg of the water. There is no particular upper limit to the concentration of the electrolyte. For example, the concentration of the electrolyte may be 25 mol or less.

An electrolyte solution containing a lithium salt and a non-aqueous solvent is typically used as the non-aqueous electrolyte solution. Examples of lithium salts include inorganic lithium salts such as LiPF₆, LiBF₄, LiClO₄, and LiAsF₆, and organic lithium salts such as LiCF₃SO₃, LiN(SO₂CF₃)₂(Li-TFSI), LiN(SO₂C₂F₅)₂, and LiC(SO₂CF₃)₃.
Examples of non-aqueous solvents include ethylene carbonate (EC), propylene carbonate (PC), butylene carbonate (BC), dimethyl carbonate (DMC), diethyl carbonate (DEC), ethyl methyl carbonate (EMC), γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyl tetrahydrofuran, dimethyl sulfoxide (DMSO), and mixtures thereof. From the standpoint of ensuring high dielectric constant and low viscosity, the non-aqueous solvent may be a mixture of a cyclic carbonate compound having a high dielectric constant and high viscosity such as EC, PC, or BC and a chain carbonate compound having a low dielectric constant and low viscosity such as DMC, DEC, or EMC, or may be a mixture of EC and DEC.
The concentration of the lithium salt in the non-aqueous electrolyte solution may be, for example, from 0.3 M to 5 M.

The non-aqueous electrolyte solution may contain an ionic liquid. The ionic liquid may include, for example, at least one selected from the group consisting of sulfonium salts, ammonium salts, pyridinium salts, piperidinium salts, pyrrolidinium salts, morpholinium salts, phosphonium salts, imidazolium salts, and derivatives thereof.

The electrolyte layer may include a separator impregnated with the above electrolyte solution and configured to isolate the cathode layer from the anode layer.
The material of the separator is not particularly limited as long as it is a porous membrane, and examples include resins such as polyethylene (PE), polypropylene (PP), polyester, polyvinyl alcohol, cellulose, and polyamide. Among these, polyethylene and polypropylene may be used. The separator may have a single-layer structure or a multilayer structure. Examples of separators having a multi-layer structure include a separator having a two-layer structure of PE/PP, and a separator having a three-layer structure of PP/PE/PP or PE/PP/PE.
The separator may be a nonwoven fabric such as a resin nonwoven fabric or a glass fiber nonwoven fabric.

The electrolyte layer may be a solid electrolyte layer composed of a solid.
When the electrolyte layer is a solid electrolyte layer, the solid electrolyte layer contains a solid electrolyte, and also contains a binder etc. if necessary.
The solid electrolyte may be the same as that described above in "2. Anode Layer." One solid electrolyte may be used alone, or two or more solid electrolytes may be used in combination. The proportion of the solid electrolyte in the solid electrolyte layer is not particularly limited, but is, for example, 50 mass% or more, and may be 60 mass% or more and 100 mass% or less, 70 mass% or more and 100 mass% or less, or 100 mass%. The solid electrolyte layer may contain less than 1 mass% of an electrolyte solution with respect to the total amount of the solid electrolyte layer.
Examples of the binder include the binders that can be contained in the anode layer described above. The content of the binder in the solid electrolyte layer may be 0 mass% to 10 mass% with respect to the total amount of the solid electrolyte layer.

The thickness of the electrolyte layer is, for example, 0.1 µm or more and 1000 µm or less, and may be 0.1 µm or more and 500 µm or less, or 0.1 µm or more and 100 µm or less.

The battery in the present disclosure may further include a binding jig that applies a binding pressure along a thickness direction to the cathode, the electrolyte layer, and the anode. In particular, when the electrolyte layer is a solid electrolyte layer, the binding pressure may be applied to form satisfactory ion conduction paths and satisfactory electron conduction paths. The binding pressure may be, for example, 0.1 MPa or more, 1 MPa or more, or 5 MPa or more, and 100 MPa or less, 50 MPa or less, or 20 MPa or less.

### Battery

The type of battery in the present disclosure is not particularly limited, but is typically a lithium-ion battery. The battery in the present disclosure may be a liquid-state battery in which the electrolyte layer contains a liquid electrolyte, or a solid-state battery in which the electrolyte layer contains a solid electrolyte. The solid-state battery may be a semi-solid-state battery or an all-solid-state battery. In the present disclosure, a semi-solid-state battery is a battery in which the electrolyte layer contains solid components such as a solid electrolyte and liquid components (such as a solvent and a liquid electrolyte). In the present disclosure, the all-solid-state battery is a battery in which the electrolyte layer contains only solid components such as a solid electrolyte. The battery in the present disclosure may be a primary battery or a secondary battery, and may particularly be a secondary battery. This is because a secondary battery can be repeatedly charged and discharged and is useful as, for example, an in-vehicle battery.
The shape of the battery is not particularly limited. For example, the battery may be a coin battery, a cylindrical battery, a prismatic battery, a sheet battery, a button battery, a flat battery, or a laminated battery.
Applications of the battery include power sources for vehicles such as hybrid electric vehicles (HEVs), plug-in hybrid electric vehicles (PHEVs), battery electric vehicles (BEVs), gasoline vehicles, and diesel vehicles. In particular, the battery may be used as a drive power source for hybrid electric vehicles (HEVs), plug-in hybrid electric vehicles (PHEVs), or battery electric vehicles (BEVs). The battery may also be used as a power source for mobile bodies other than vehicles (e.g., trains, ships, and aircraft) or as a power source for electrical products such as information processing devices.

### Example 1

Preparation of Composite Porous Si Particles

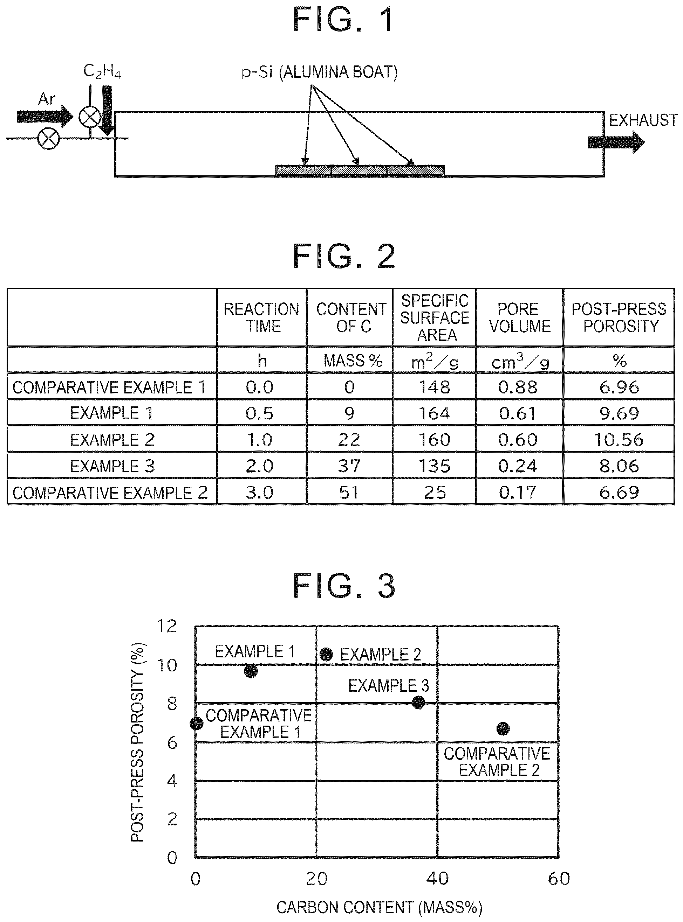

FIG. 1 is a schematic diagram of a tubular furnace used in production of composite porous Si particles in examples.
First, an alumina boat and porous Si particles serving as a sample were weighed in a glove box.
Next, the sample placed on the alumina boat was placed in a tubular furnace. At this time, the exposure time to the atmosphere was kept as short as possible.
Subsequently, the inside of the tubular furnace was purged with Ar at room temperature, and then the temperature inside the tubular furnace was increased while causing only Ar to flow at 200 cm³/min. When the temperature reached 800°C, C₂H₄ was caused to flow into the tubular furnace at 10 cm³/min to initiate the reaction and introduce carbon onto the surfaces of the porous Si particles. After the flow of C₂H₄ for 0.5 hours, the flow of C₂H₄ was stopped to terminate the reaction. Then, only Ar was caused to flow through the tubular furnace, and the temperature was reduced by natural cooling.
The alumina boat and the sample were removed from the tubular furnace and quickly moved to a glove box to prevent oxidation.

### Example 2

Carbon was introduced onto the surfaces of the porous Si particles to prepare composite porous Si particles in the same manner as in Example 1, except that the flow time (reaction time) of C₂H₄ was set to 1 hour.

### Example 3

Carbon was introduced onto the surfaces of the porous Si particles to prepare composite porous Si particles in the same manner as in Example 1, except that the flow time (reaction time) of C₂H₄ was set to 2 hours.

### Comparative Example 1

The porous Si particles used as the raw material for the composite porous Si particles in Example 1 were set as Comparative Example 1.

### Comparative Example 2

Carbon was introduced onto the surfaces of the porous Si particles to prepare composite porous Si particles in the same manner as in Example 1, except that the flow time (reaction time) of C₂H₄ was set to 3 hours.

### Evaluation

The composite porous Si particles of Examples 1 to 3 and Comparative Example 2 obtained above, and the porous Si particles of Comparative Example 1 were evaluated as follows. The results are shown in FIG. 2. FIG. 2 is a table showing data on the examples and the comparative examples.

### Measurement of Carbon Proportion

The carbon (C) content was measured using a CS meter.

### Measurement of Specific Surface Area

The specific surface area was measured by the BET method using a gas adsorption apparatus.

### Measurement of Pore Volume

The pore volume was measured by the BJH method using a gas adsorption apparatus. Measurement of Post-press Porosity

Each of the composite porous Si particles or the porous Si particles was mixed with zinc powder at a mass ratio of 1:10, and the mixture was pelletized at 30 MPa. The obtained pellet was subjected to cross-section processing using a cross section polisher (CP (registered trademark)) and then observed using an SEM. The obtained SEM image was binarized, and the porosity was calculated from the area of pores with respect to the total area of each of the composite porous Si particles or the porous Si particles. FIG. 3 is a graph showing post-press porosities of the examples and the comparative examples.

As shown in FIG. 2, the composite porous Si particles of Examples 1 to 3 and Comparative Example 2 in which carbon was introduced had smaller pore volumes than the porous Si particles of Comparative Example 1 in which carbon was not introduced. This is because at least part of the surfaces of the porous Si particles were coated with the carbon material. Comparing Examples 1 to 3 and Comparative Example 2, the pore volume decreased as the carbon content increased. Therefore, it can be inferred that the surfaces of the porous Si particles of the composite porous Si particles of Examples 1 to 3 and Comparative Example 2 were coated with the carbon material.
As shown in FIGS. 2 and 3, the composite porous Si particles of Examples 1 to 3 that had pore volumes of 0.24 cm³/g or more and 0.61 cm³/g or less had post-press porosities of 9.69%, 10.56%, and 8.06%, respectively, which were larger than 6.96% for the porous Si particles of Comparative Example 1 in which carbon was not introduced. This is presumably because the mechanical strength of the porous Si particles was increased by coating the surfaces of the composite porous Si particles with the carbon material. Although the pore volume of Comparative Example 1 was larger than those of Examples 1 to 3, the post-press porosity of Comparative Example 1 was smaller than those of Examples 1 to 3. Thus, it can be seen that the pores of Comparative Example 1 were collapsed by pressing.
The composite porous Si particles of Comparative Example 2 in which the surfaces were coated with the carbon material as in Examples 1 to 3 had a pore volume of 0.17 cm³/g, which was smaller than those of Examples 1 to 3, and the post-press porosity was also smaller than those of Examples 1 to 3 and Comparative Example 1. Further, the specific surface area of Comparative Example 2 was 25 m³/g, which was significantly smaller than those of Examples 1 to 3. Considering these results and the carbon contents, it is presumed that, in Comparative Example 2, too much carbon was introduced onto the surfaces of the porous Si particles, thereby filling the pores and resulting in a small porosity even before the pressing.
The composite porous Si particles of Examples 1 to 3 had a specific surface area of 135 m²/g or more and 164 m²/g or less, and a carbon content (C content) of 9 mass% or more and 37 mass% or less.

## Claims

1. A composite porous Si particle comprising carbon on at least part of a surface of a porous Si particle, wherein
a pore volume of the composite porous Si particle is 0.24 cm³/g or more and 0.61 cm³/g or less.

2. The composite porous Si particle according to claim 1, wherein a specific surface area of the composite porous Si particle is 135 m²/g or more and 164 m²/g or less.

3. The composite porous Si particle according to claim 1 or 2, wherein a content of the carbon in the composite porous Si particle is 9 mass% or more and 37 mass% or less.

4. An anode layer comprising the composite porous Si particle according to any one of claims 1 to 3.

5. A battery comprising the anode layer according to claim 4.
